# EUROPÄISCHE PATENTANMELDUNG

(11) **EP 1 975 588 A2**
(43) Veröffentlichungstag der Anmeldung: **01.10.2008**
(21) Anmeldenummer: 08000638.0
(22) Anmeldetag: 15.01.2008
(51) Int. Cl.: G01L 9/12, G01L 27/00, G01L 19/00

(54) **Messzellenanordnung, insbesondere Druckmesszellenanordnung**

(30) Priorität: 26.03.2007 DE 102007014898
(71) Anmelder: VEGA Grieshaber KG, 77709 Wolfach (DE)
(72) Erfinder: Mellert, Martin, 77790 Steinach (DE)
(74) Vertreter: Göhring, Robert

(57) **Zusammenfassung**

Die Erfindung bezieht sich auf eine Messzellenanordnung, insbesondere Druckmesszellenanordnung, umfassend eine Messzelle und eine Speichereinrichtung mit zumindest einem eingespeicherten, messzellenbezogenen Speicherwert, wobei die Messzelle samt Speichereinrichtung als separat handhabbare Einheit ausgebildet ist.

## Beschreibung

Die Erfindung bezieht sich auf eine Messzellenanordnung, insbesondere Druckmesszellenanordnung.

Eine übliche Messvorrichtung für Druckmessungen in beispielsweise einer Leitung oder einem Silo besteht aus einem Gehäuse mit einer integrierten Elektronik sowie stirnseitig einer Messzellenanordnung mit einer Messzelle. Messwerte der Messzelle werden der Elektronik zugeführt und von dieser verarbeitet, um verarbeitete Daten über eine Extern-Schnittstelle auszugeben.

Aufgrund von fertigungsbedingten Toleranzen und Fehlern bei der Herstellung der Messzellenanordnung werden üblicherweise nach der Herstellung in einem ersten Schritt Parameter und/oder Messwerte der Messenzellenanordnung ermittelt. Sofern die Parameter und Messwerte in einem zulässigen Toleranzbereich liegen, wird die Messzellenanordnung nachfolgend für ein späteres Einsetzen in ein Gehäuse einer Messvorrichtung bereitgestellt, insbesondere eingelagert. Dabei wird beim Einlagern teilweise eine Unterscheidung nach Messzellenanordnungen verschiedener Güte vorgenommen, so dass die Messzellenanordnungen geringerer Güte separat von Messzellenanordnungen höherer Güte gelagert werden.

Zu einem späteren zweiten Zeitpunkt werden dann derart bereitgestellte Messzellenanordnungen in das Gehäuse einer Messvorrichtung eingesetzt und mit der Elektronik bzw. Steuereinrichtung der Messvorrichtung verbunden. Außerdem wird eine erneute zweite Messung von Messwerten und/oder Parametern der Messzelle vorgenommen, um einen messzellen-bezogenen Speicherwert als Korrekturwert zur Korrektur von Messwerten oder daraus gewonnenen Daten abhängig von einem derart bestimmten spezifischen Parameter dieser speziellen Messzellenanordnung bereitzustellen und bei späteren Messvorgängen in der Steuereinrichtung zur Bereitstellung der verarbeiteten und somit korrigierten Daten verwenden zu können. Ein solcher messzellen-bezogener Speicherwert wird dann in einem der Elektronik der Messvorrichtung zugeordneten Speicher im Gehäuse der Messvorrichtung gespeichert.

Nachteilhaft ist bei einer solche Verfahrensweise, dass letztendlich jede Messzelle bzw. Messzellenanordnung hinsichtlich zumindest eines Messwerts oder Parameters zweimal geprüft wird, ein erstes Mal für eine Vorauswahl bzw. Aussonderung der Messzellenanordnung und ein zweites Mal für eine Bestimmung von Korrekturwerten für diese Messzellenanordnung.

Die Aufgabe der Erfindung besteht darin, eine Messzellenanordnung, insbesondere Druckmesszellenanordnung, welche mit reduziertem Aufwand in eine Messvorrichtung eingesetzt werden kann, vorzuschlagen.

Diese Aufgabe wird durch eine Messzellenanordnung, insbesondere Druckmesszellenanordnung, mit den Merkmalen des Patentanspruchs 1 gelöst.

Vorteilhafte Ausgestaltungen sind Gegenstand von abhängigen Ansprüchen.

Bevorzugt wird demgemäss eine Messzellenanordnung, insbesondere kapazitive Druckmesszellenanordnung, mit einer Messzelle und einer Speichereinrichtung, in welche zumindest ein eingespeicherter messzellenbezogener Speicherwert eingespeichert ist. Dabei ist die Messzelle samt Speichereinrichtung als separat handhabbare Einheit ausgebildet.

Die Speichereinrichtung ist dabei bevorzugt fest an der Messzelle befestigt. Die Speichereinrichtung ist vorteilhaft über eine Platine fest an der Messzelle befestigt. Die Speichereinrichtung ist bevorzugt raumsparend im meist sowieso vorhandenen Freiraum zwischen der Platine und der Messzelle angeordnet.

Bevorzugt wird in der Messzellenanordnung eine integrierten Schaltung, die zum Einspeichern des zumindest einen messzellenbezogenen Speicherwerts in die Speichereinrichtung und/oder zum Auslesen des zumindest einen messzellenbezogenen Speicherwerts aus der Speichereinrichtung ausgestaltet und/oder programmierbar ist. Insbesondere sind dadurch einzuspeichernde oder eingespeicherte Daten verarbeitbar und es kann gezielt auf die Speichereinrichtung zugegriffen werden. Die Speichereinrichtung kann auf einfache Art und Weise direkt in der integrierten Schaltung aufgenommen sein.

Die integrierten Schaltung kann einen Prozessor oder eine Steuereinrichtung für auch höherwertige Verarbeitungen aufweisen, insbesondere zum Bereitstellen von aus den Messdaten der Messzelle gewonnenen Daten. So können von der Messzellenanordnung z.B. anstelle kapazitiver Messwerte bzw. Messdaten mittels der Steuereinrichtung bereitgestellte Frequenzwerte ausgegeben werden.

Die Messzellenanordnung ist bevorzugt direkt mit einer Temperaturmesseinrichtung zum Bereitstellen eines Temperaturwerts abhängig von einer Temperatur im Bereich der Messzelle ausgestattet zum direkten Erzeugen des zumindest einen messzellenbezogenen Speicherwerts oder zum bereitstellen eines Referenzwertes, mit dem eine externe Steuereinrichtung einen solchen messzellenbezogenen Speicherwert bestimmen und bereitstellen kann.

Die Messzellenanordnung ist in üblicher Art und Weise mit einer Schnittstelle zum Übertragen von Daten zwischen der Speichereinrichtung und einer externen Vorrichtung ausgestattet, wobei zusätzlich zu reinen Messdaten auch der messzellenbezogenen Speicherwert darüber übertragbar ist. Die externe Vorrichtung ist dabei vorzugsweise als Prozessor oder eine Steuereinrichtung ausgestaltet zum Bereitstellen verarbeiteter Messdaten mittels des zumindest einen messzellenbezogenen Speicherwerts und/oder mittels aus der Messzelle stammenden Messdaten oder aus den Messdaten gewonnenen Daten.

Die Messzelle kann derart vorteilhaft auch mit einem Außendurchmesser kleiner 40 mm, vorzugsweise kleiner 25 mm ausgestaltet werden.

Bevorzugt wird demgemäss eigenständig auch ein Verfahren zum Bereitstellen einer solchen Messzellenanordnung, bei dem nach der Herstellung der Messzellenanordnung Parameter und/oder Messwerte der Messzellenanordnung ermittelt werden und die Messzellenanordnung nachfolgend für ein späteres Einsetzen in ein Gehäuse einer Messvorrichtung bereitgestellt wird, insbesondere eingelagert wird, wobei nach dem Ermitteln der Messwerte und/oder Parameter der zumindest eine messzellenbezogene. Speicherwert abhängig von den Messwerten und/oder Parametern bereitgestellt und in die Speichereinrichtung der Messzellenanordnung eingespeichert wird.

Bevorzugt wird demgemäss eigenständig eine Messvorrichtung, insbesondere Druckmessvorrichtung, mit einer einsetzbaren oder eingesetzten solchen Messzellenanordnung, einer Schnittstelle zum Übertragen von Messdaten und zumindest einem messzellenbezogenen Speicherwert aus der Speichereinrichtung einer derart eingesetzten Messzellenanordnung und einem Prozessor oder einer Steuereinrichtung zum Bereitstellen verarbeiteter Messdaten mittels des zumindest einen messzellenbezogenen Speicherwerts und mittels aus der Messzelle der Messzellenanordnung stammenden Messdaten oder aus den Messdaten gewonnenen, Daten.

Bevorzugt wird demgemäss außerdem eine solche Messzellenanordnung, eine solche Programmiervorrichtung, ein solches Verfahren oder eine solche Messvorrichtung, wobei der zumindest eine messzellenbezogene Speicherwert ein Korrekturwert zur Korrektur von Messwerten oder daraus gewonnenen Daten abhängig von zumindest einem spezifischen Parameter dieser Messzellenanordnung gegenüber anderen Messzellenanordnungen gleichen Typs ist.

Bevorzugt wird demgemäss außerdem eine solche Messzellenanordnung, eine solche Programmiervorrichtung, ein solches Verfahren oder eine solche Messvorrichtung, wobei der zumindest eine messzellenbezogene Speicherwert ein Anpassungswert zur Anpassung von Messwerten oder daraus gewonnenen Daten abhängig von zumindest einem spezifischen Parameter dieser Messzellenanordnung gegenüber anderen Messzellenanordnungen eines anderen Typs von Messzellenanordnungen ist.

Vorteilhaft ist eine solche Messzellenanordnung in Verbindung mit der Verfahrensweise sowie auch die Herstellung einer derartigen Messvorrichtung insbesondere dadurch, dass nach der Herstellung ein Arbeitsschritt entfallen kann. Anstelle die Messzelle bzw. deren spezifische Parameter zweimal messen zu müssen, ein erstes Mal zur Aussortierung fehlerhafter Messzellen, und ein zweites Mal in Verbindung mit der Montage in einer Messvorrichtung, ist bezüglich zumindest eines typischen Messwerts oder Parameters nur ein einziger Messvorgang erforderlich. Mittels einer entsprechenden Prüfvorrichtung, welche gleichzeitig als Programmiervorrichtung ausgestaltet ist, werden nicht nur in für sich bekannter Art und Weise von der fertiggestellten Messzellenanordnung deren charakteristische Messwerte und Parameter bestimmt. Zusätzlich werden entsprechende messzellen-bezogene Speicherwerte berechnet, welche in einem der Messzelle fest zugeordneten Speicher gespeichert werden. Bei dem späteren Einbau in einer Messvorrichtung kann die Steuereinrichtung der Messvorrichtung dann solche Speicherwerte auslesen und direkt als Korrekturwerte oder Werte zur messzellen-spezifischen Messwertverarbeitung verwenden. Alternativ oder zusätzlich können nach dem Einbau in eine Messvorrichtung solche messzellen-bezogene Speicherwerte in einen Speicher übertragen werden, welcher der Elektronik bzw. Steuereinrichtung der Messvorrichtung zugeordnet ist.

Ein Ausführungsbeispiel wird nachfolgend anhand der Zeichnung näher erläutert. In den verschiedenen Fig. werden dabei gleiche Bezugszeichen für einander entsprechende Komponenten und Daten oder gleich wirkende Komponenten und Daten verwendet, wobei diesbezüglich auch auf die Ausführungen zu den jeweils anderen Fig. verwiesen wird. Es zeigen:
- Fig.: 1 oben links eine Messzellenanordnung mit einer hergestellten Messzelle, welche mit einer rechtsseitig dargestellten Prüf- und Programmiervorrichtung auf charakteristische Messzellenparameter zu untersuchen ist, sowie darunter eine Messzellenanordnung in einem Zwischenschritt während der Montage in eine Messvorrichtung,
- Fig. 2: eine weitere detaillierter dargestellte Messzellenanordnung, welche in einer Messvorrichtung eingesetzt ist, und
- Fig. 3: einzelne Komponenten einer solchen Messzellenanordnung.

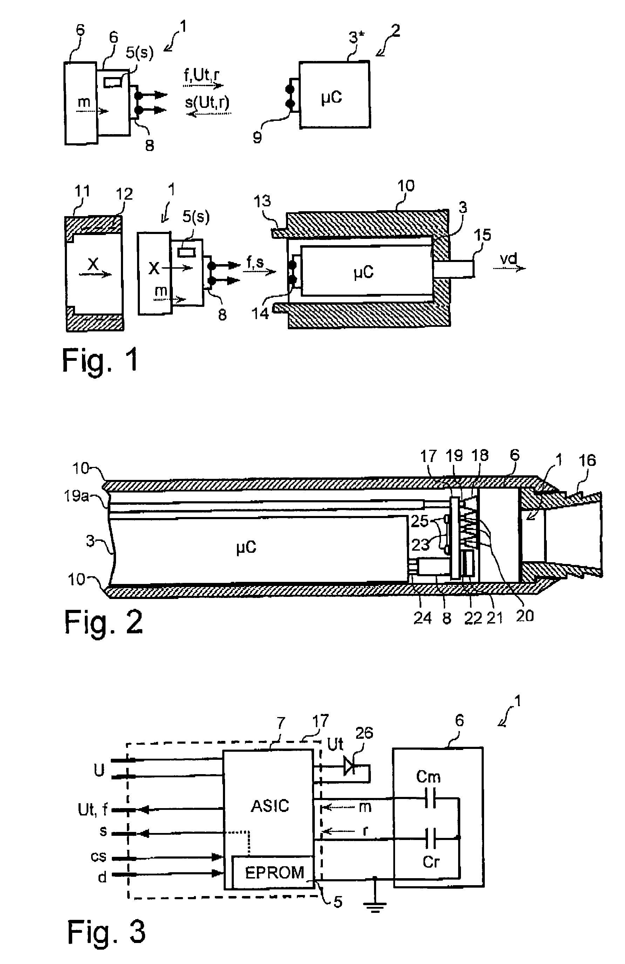

Wie dies aus Fig. 1 ersichtlich ist, wird in einem ersten Herstellungsschritt eine Messzellenanordnung 1 gefertigt, wobei nach der Herstellung charakteristische Messdaten m und sonstige Parameter Ut, r oder aus den Messdaten m erstellte Daten f mittels einer Prüf- und Programmiervorrichtung geprüft und analysiert werden. Von der Programmiervorrichtung 2 der Prüf- und Programmiervorrichtung wird zumindest ein messzellenbezogener Speicherwert s bestimmt, welcher später von einer Steuereinrichtung 3 einer Messvorrichtung 4 verwendet werden kann.

Der messzellen-bezogene Speicherwert s wird entsprechend von der Programmiervorrichtung 2, ggfs. unter Einsatz einer Steuerlogik der Messzellenanordnung 1, in einer Speichereinrichtung 5 gespeichert, welche fest mit weiteren Komponenten der Messzellenanordnung 1 verbunden ist.

Insbesondere steht die Speichereinrichtung 5 dadurch in einer festen räumlichen Verbindung bzw. Beziehung mit einer Messzelle 6 der Messzellenanordnung 1. Die Messzelle 6 ist besonders bevorzugt eine Druckmesszelle, jedoch können auch andere Messzellentypen prinzipiell derart mit einer geeigneten Speichereinrichtung ausgestattet werden.

Vorzugsweise ist die Speichereinrichtung 5 als Bestandteil oder in fester Verbindung mit einer integrierten Schaltung 7 oder Steuerlogik ausgestaltet, so dass gegebenenfalls auch eine bedingte Vorverarbeitung von Messdaten m und messzellenbezogenen Speicherwerten s durchführbar ist.

Zur Übertragung der Messdaten m bzw. daraus gewonnener Daten f sowie gegebenenfalls von Temperaturwerten Ut oder sonstigen Parametern wie einem Referenzwert r weist die Messzellenanordnung 1 eine Schnittstelle 8 auf, welche für eine Kommunikation der entsprechenden Daten und Parameter an eine geeignete Schnittstelle 9 der Prüf- und Programmiervorrichtung 2 anschließbar ist.

Nachdem eine derart vorbereitete Messzellenanordnung 1 mit in der Speichereinrichtung 5 zumindest einem messzellen-bezogenen Speicherwert s vorbereitet wurde, kann sie zu späteren Einsatzzwecken bereitgestellt, insbesondere eingelagert werden. Zu einem späteren Zeitpunkt wird dann diese Messzellenanordnung 1 zum Einbau in die Messvorrichtung 4 bereitgestellt.

Die Messvorrichtung 4 besteht in üblicher Art und Weise aus einem Gehäuse 10, in dessen vorderseitige bzw, frontseitige öffnung die Messzellenanordnung 1 einsetzbar ist. Zur Fixierung der Messzellenanordnung 1 dient nach dem Einsetzen beispielsweise eine frontseitige Spannvorrichtung 11, welche zum Umgreifen der Messzellenanordnung 1 ausgestaltet ist und mittels beispielsweise eines Gewindes 12 an einem Gehäusegewinde 13 anschraubbar ist.

Mittels der Schnittstelle 8 der Messzellenanordnung 1 wird dabei die Messzellenanordnung 1 an eine Schnittstelle 14 angeschlossen, welche der Steuereinrichtung 3 zugeordnet ist, welche im rückseitigen Bereich der Messvorrichtung 4 angeordnet ist. Dadurch können Messdaten m, aus den Messdaten m gewonnene Daten f, weitere Parameter, wie Temperaturwerte Ut oder Referenzwerte r, sowie insbesondere auch der zumindest eine messzellen-bezogene Speicherwert s aus der Messzellenanordnung zu der Steuereinrichtung 3, µC übertragen werden. Dadurch kann die Steuereinrichtung 3 direkt erforderliche Korrekturen oder sonstige Datenanpassungen vornehmen, ohne dass eine Kalibrierung oder dergleichen der eingesetzten Messzellenanordnung 1 in einem weiteren Arbeitsschritt erforderlich ist. Entsprechend verarbeitete Daten vd können somit direkt als korrigierte Messdaten m über eine Extern-Schnittstelle 15 von der Messvorrichtung 4 an eine weitere Vorrichtung ausgegeben werden.

Fig. 2 zeigt eine weitere beispielhafte Anordnung mit einer Messzellenanordnung 1, wobei gleiche Bezugszeichen für entsprechende Komponenten und Daten oder gleich wirkende Komponenten und Daten verwendet sind und diesbezüglich auch auf die Ausführungen zu Fig. 1 verwiesen wird.

Die Messzellenanordnung 1 ist wiederum frontseitig in einem Gehäuse 10 eingesetzt, wobei vorderseitig der Messzelle 6 eine Antenne 16 im Gehäuse 10 eingesetzt ist, wobei die Antenne 16 vorderseitig aus dem Gehäuse 10 herausragt.

Rückseitig der Messzelle 6 ist von dieser beabstandet eine Platine 17 angeordnet, wobei die Platine 17 vorzugsweise einen vergleichbaren Außenumfang wie die Messzelle 6 aufweist. Im Fall einer kreisrunden Messzelle 6 ist entsprechend die Platine 17 vorzugsweise ebenfalls kreisrund ausgestaltet.

Die Beabstandung der Platine 17 von der Rückseite der Messzelle 6 dient insbesondere dazu, Raum für Anschlusselemente 18 zu bieten, über welche ein Belüftungsrohr 19 und Leiter 20 an dem bzw. relativ zu dem Messzellengehäuse der Messzelle 6 befestigt sind. Das Belüftungsrohr 19 führt dabei vorzugsweise an der Platine vorbei oder durch eine Durchgangsöffnung der Platine 17 hindurch und ist über ein weiteres Belüftungsrohr 19a in für sich bekannter Art und Weise mit einer rückseitigen Belüftungseinrichtung der Messvorrichtung 4 verbunden. Die Speichereinrichtung ist entsprechend vorzugsweise in einem Raumbereich zwischen der Platine 17 und der Rückseite der Messzelle 6 angeordnet, kann jedoch auch in rückseitiger Richtung der Platine 17 angeordnet werden.

Bei der dargestellten bevorzugten Ausführungsform ist die Speichereinrichtung in einer integrierten Schaltung 21 aufgenommen, welche über einen Sockel 22 oder gegebenenfalls auch als oberflächen-montiertes Bauelement an der Platine 17 angeschlossen ist. Die integrierte Schaltung 21 steht über gedruckte Leiter 23 mit den Leitern 20 sowie mit einer Schnittstelle 8 und Leitern 24 der Schnittstelle 8 in Verbindung. Die gedruckten Leiter 23 sind gegebenenfalls unter Einsatz von Float-Pads 25 mit den Leitern 20 kontaktiert. Die Schnittstelle 8 ragt vorzugsweise in rückseitiger Richtung von der Platine 17 weg in Richtung einer Steuereinrichtung 3, µC welche rückseitig im Gehäuse 10 aufgenommen ist.

Fig. 3 zeigt eine beispielhafte Anordnung von Komponenten einer solchen Messzellenanordnung 1. Skizziert ist die vorderseitige Messzelle 6, welche als Messwert m einen Kapazitätswert Cm bereitstellt. Außerdem wird ein Referenzwert r in Form eines Kapazitäts-Referenzwertes Cr bereitgestellt. Die beiden kapazitiven Größen werden beispielsweise parallel zueinander geschaltet und mit ihrem einen, der Messzelle 6 abgewandten Ende mit der integrierten Schaltung 7 verbunden und mit ihrem anderen Ende mit Masse bzw. einem entsprechenden Anschluss verbunden. Der Masseanschluss ist vorzugsweise ebenfalls mit der integrierten Schaltung 7 verbunden. Bei der dargestellten Ausführungsform ist die integrierte Schaltung 7 beispielhaft als eine anwendungsspezifische integrierte Schaltung ASIC ausgestaltet. Jedoch können prinzipiell auch einfache logische Verbindungen auf einer Platine 17 bereitgestellt werden.

Dargestellt ist außerdem ein Thermoelement als Temperaturmesseinrichtung 26 zum Bestimmen eines Temperaturwertes Ut im Bereich der Messzelle 6, um jeweils momentane auf die Druckmesszelle und somit deren Messwerte m einwirkende Temperaturen erfassen zu können. Die Temperaturmesseinrichtung 26, beispielsweise umgesetzt in Form einer üblichen Diodenschaltung, ist vorzugsweise ebenfalls direkt mit der integrierten Schaltung 7 verbunden.

Außerdem umfasst die integrierte Schaltung 7 vorzugsweise einen Speicherabschnitt, welcher als die Speichereinrichtung 5 ausgestaltet ist. Zusätzlich oder als diese Speichereinrichtung 5 ausgestaltet, kann ein löschbarer und programmierbarer Nur-Lese-Speicher EPROM Bestandteil der integrierten Schaltung sein oder auch als eigenständige Komponente angeordnet sein.

Im Fall der beispielhaften integrierten Schaltung 7 ist diese vorzugsweise mit einer Vielzahl von Leitern verschaltet, welche die Schnittstelle 8 ausbilden. So sind Leiter zum Anlegen einer Betriebsspannung U vorgesehen. Außerdem sind tiblicherweise einer oder mehrere Leiter zum Übertragen von Messwerten bzw. Messdaten m der Messzelle 6 oder daraus gewonnenen Daten f vorgesehen. Im Fall der daraus gewonnen Daten f handelt es sich beispielsweise um Frequenzwerte, welche von der integrierten Schaltung 7 aus den eigentlichen Messdaten m bzw. diesen entsprechend bestimmt werden. In einem solchen Fall wird somit ein Frequenzwert f bzw. Frequenzdatenwert anstelle eines kapazitiven Messdatenwerts Cm an die nachgeschaltete Steuereinrichtung 3 ausgegeben. Weitere Ein- und Ausgänge werden durch jeweils separate oder gemeinsam genutzte Leiter im Rahmen der Schnittstelle 8 bereitgestellt, um beispielsweise ein Chip-Auswahlsignal cs, zumindest einen messzellen-bezogenen Speicherwert s und/oder Daten zwischen der integrierten Schaltung 7 und einer daran angeschlossenen Prüf- und Programmiervorrichtung 2 oder Steuereinrichtung 3 zu kommunizieren.

Umsetzbar sind auch modifizierte Ausgestaltungen. So können in der Speichereinrichtung 5 der Messzellenanordnung 1 auch weitere Werte eingespeichert werden, insbesondere Seriennummern, Typenkennungen und Güteinformationen.

## Patentansprüche

1. Messzellenanordnung (1), insbesondere Druckmesszellenanordnung, umfassend
- eine Messzelle (6), und
- eine Speichereinrichtung (5) mit zumindest einem eingespeicherten, messzellenbezogenen Speicherwert (s), wobei die Messzelle (6) samt Speichereinrichtung (5) als separat handhabbare Einheit ausgebildet ist.

2. Messzellenanordnung nach Anspruch 1, bei der die Speichereinrichtung (5) fest an der Messzelle (6) befestigt ist.

3. Messzellenanordnung nach Anspruch 1 oder 2, bei der die Speichereinrichtung (5) über eine Platine (17) fest an der Messzelle (6) befestigt ist.

4. Messzellenanordnung nach Anspruch 3, bei der die Speichereinrichtung (5) zwischen der Platine (17) und der Messzelle (6) angeordnet ist.

5. Messzellenanordnung nach einem vorstehenden Anspruch mit einer integrierten Schaltung (7), die zum Einspeichern des zumindest einen messzellenbezogenen Speicherwerts (s) in die Speichereinrichtung (5) und/oder zum Auslesen des zumindest einen messzellenbezogenen Speicherwerts aus der Speichereinrichtung (5) ausgestaltet und/oder programmierbar ist.

6. Messzellenanordnung nach Anspruch 5, bei der die Speichereinrichtung (5) in der integrierten Schaltung (7) aufgenommen ist.

7. Messzellenanordnung nach Anspruch 5 oder 6, bei der die integrierten Schaltung (7) einen Prozessor oder eine Steuereinrichtung aufweist zum Bereitstellen von aus den Messdaten (m) der Messzelle (6) gewonnenen Daten (f).

8. Messzellenanordnung nach einem vorstehenden Anspruch mit einer Temperaturmesseinrichtung (26) zum Bereitstellen eines Temperaturwerts (Ut) abhängig von einer Temperatur im Bereich der Messzelle (6) zum Erzeugen des zumindest einen messzellenbezogenen Speicherwerts (s).

9. Messzellenanordnung nach einem vorstehenden Anspruch mit einer Schnittstelle (8) zum Übertragen von Daten zwischen der Speichereinrichtung (5) und einer externen Vorrichtung.

10. Messzellenanordnung nach Anspruch 9, bei der die externe Vorrichtung einen Prozessor oder eine Steuereinrichtung (3, µC) ist zum Bereitstellen verarbeiteter Messdaten (vd) mittels des zumindest einen messzellenbezogenen Speicherwerts (s) und/oder mittels aus der Messzelle (6) stammenden Messdaten (m) oder aus den Messdaten (m) gewonnenen Daten (f).

11. Messzellenanordnung nach einem vorstehenden Anspruch, bei der die Messzelle (6) einen Außendurchmesser kleiner 40 mm ist, vorzugsweise kleiner 25 mm ist.
